# EUROPEAN PATENT APPLICATION

(11) **EP 2 043 018 A1**
(43) Date of publication of application: **01.04.2009**
(21) Application number: 07405288.7
(22) Date of filing: 26.09.2007
(51) Int. Cl.: G06F 21/00

(54) **Method and apparatus for controlling data access in a workflow system**

(71) Applicant: SWX Swiss Exchange AG, 8001 Zürich (CH)
(72) Inventor: Nathaniel, Alfred, 1201 Genève (CH); Layda, Torsten, 1296 Coppet (CH); Schlapbach, Andrea, Zug (CH)
(74) Representative: Frei Patent Attorneys

(57) **Abstract**

A method and a data processing system are presented, for controlling a workflow and for accessing data that is stored in computer-readable form and is modified in the course of the workflow.

Thus, the following conventions and rules are implemented:
- A data set comprises one or more data items.
- A data set can potentially be acted upon (modified) by a user.
- A data set is defined (1) and associated with one of several statuses.
- A set of privileges is defined (2).
- Each user (or user identity) is associated with one or more privileges (3).
- Each status is associated (4) with at least one action-privileges pair.

When interacting (5) with a user, an action by the user affecting a given data set in a given status is allowable if and only if
- the user privileges and
- the privileges of the action-privileges pair of said action in said status have at least one privilege in common.

The set of conventions and the rule for action define a framework which allows to specify "who may when change what" in a very compact, non-redundant manner. Whether a particular data item or data set is changeable can be determined from the context (user and status) of the data set in an efficient manner.

## Description

### FIELD OF THE INVENTION

The invention relates to the field of data processing, and in particular to the control of workflows and access rights involving data sets being processed by different users. It relates to a method and a data processing system for controlling data access as described in the preamble of the corresponding independent claims.

### BACKGROUND OF THE INVENTION

Computer based data handling systems may define workflows which involve multiple entities and multiple persons acting on the same set of data. At a particular stage in the workflow, certain data items of the data set may be modified by certain persons, and at a later stage, certain other data items may be modified by again other persons. Access to the complete data set or to subsets of the data set may be controlled by e.g. access control lists (ACLs). However, current implementations are cumbersome and error prone.

### DESCRIPTION OF THE INVENTION

It is therefore an objective of the invention to create a method and a data processing system for controlling data access of the type mentioned initially, which overcomes the disadvantages mentioned above.

These objectives are achieved by a method and a data processing system for controlling data access according to the corresponding independent claims.

Thus, the following conventions and rules are implemented:
- A **data set** can potentially be acted upon (modified) by a **user.**
- A data set is associated with one of several **statuses.**
- A data set comprises one or more **data items**.
- A set of **privileges** is defined.
- Each user (or user identity) is associated with one or more privileges.
- Each status is associated with at least one **action-privilege pair.**
- **Rule**: An **action** by a given user affecting a given data set in a given status is allowable if and only if
   - the user privileges and
   - the privileges of the action-privileges pair of said action in said status share at least one privilege.

A privilege is simply one of a predetermined set of constants, preferably given meaningful names or labels. For example, privileges may be "system", "staff", "decisionmaker", "external user", "requestor", etc. Different sets of privileges "sharing a privilege" means that the sets have at least one privilege in common, i.e. the intersection of the sets is not empty. A user may be associated with his privileges either directly, e.g., by a software representation of a "user privilege - user" relation, or indirectly, by means of an intermediate software entity, called a *role.* Each user is related to one or more roles, and each role is related to zero or one or more privileges. Conversely, a user has, in this manner, one or more privileges assigned to it, either directly or indirectly.

A data item is a container for the basic data units that are handled by the system, with access and modification of the data item as a whole being enabled or disabled. A data item may represent e.g. a number, or a date or a text string etc., each optionally conforming to specific formatting rules.

The data item, data set, status, privileges, rules etc. all are stored in computer readable (machine readable) form and are processed by software running on a computer or data processing system.

The set of conventions and the rule for action define a framework which allows to specify "who may when change what" in a very compact manner. This specification conversely has low or no redundancy. The workflow is an implicit result of this specification: since the system is able to determine when a particular user has the right to change a particular data set, it can automatically make the data set visible and accessible to the user according to the status of the data set, in particular when it becomes relevant to the user. Physical storage requirements for defining the workflow and the access rights are correspondingly low. Whether a particular data item or data set is changeable can be determined from the context (user and status) of the data set in a computationally efficient manner by generic rules, i.e. a program implementing such rules.

The workflow processing and access control can be generated automatically from the information in the basic framework. Preferably, forms for entering and modifying data are generated dynamically, based on the information of the data sets, data items, statuses and privileges. In particular, properties of the forms, which properties reflect the permission to change data items and statuses, are generated dynamically, depending on the current status and user.

The high level of abstraction required by this manner of specification enforces a rigid analysis of the desired system functionality and so improves the overall programming process. Since a large part of the system code is generic, development effort is reduced, and nearly all application generation can be automated.

In a preferred variant of the invention, in an action-privileges pair, the privileges are described by zero, one or more privileges. If no privilege is defined, the action cannot be performed.

In a preferred variant of the invention, in an action-privileges pair, the action is one of "modification of a data item" or "change the Status of the data set to a Next Status". In other words, an action-privilege pair associates the modification of one or more data items with certain privileges, or the modification of a status with certain privileges.

Preferably, a single action-privileges pair is configured to control the modification of all the data items of a data set being in the status to which the action-privileges pair belongs. In this case, the action is "modification of any data item of the data set being in the status", and the privileges shall be called "mutability privileges".

In a further preferred variant of the invention, one or more separate action-privileges pairs are configured to control the transition to separate Next Statuses.

In a preferred variant of the invention, each data item is associated with one or more privileges. This allows to control the mutability of each data item according to the context it is in, i.e. the data set and the status of the data set.

In a further preferred variant of the invention, the mutability of each data item is defined and controlled according to the following conventions and rule:
- Each data item is associated with exactly one privilege.
- In each status, one action-privileges pair specifies data item modification privileges.
- **Rule:** An action by a given user affecting a given data item of a given data set in a given status is allowable if and only if
   - the user privileges and
   - the data item privilege and the
   - mutability privileges of the data set in said status share at least one privilege.

Alternatively, a data item may be associated with more than one privilege, and a user may be associated with exactly one privilege.

In other words, the right to change a particular data item is thus determined by the data item itself, the status of the data set comprising the data item is in, and the privileges of the user. The privileges of the user in turn are either directly or indirectly (via a role) associated with the identity of the user.

In a further preferred variant of the invention, status changes are defined and controlled in the following manner:
- In each status, zero, one or more action-privileges pairs each specify an action as being a change of the Status of the data set to a Next Status, the action being associated with at least one privilege, also called Status Change Privilege.
- **Rule:** An action by a user involving a change of status of a given data set in a given status to a given Next Status is allowable if and only if
   - the user privileges and
   - the Status Change Privilege associated with said Next Status in said given status
      share at least one privilege.

In a further preferred embodiment of the invention, the system comprises validation rules for verifying whether the values of data items are legal and consistent. Validations rules preferably are defined on different levels, e.g. verifying whether the value of a data item ...
1. is consistent (on the class level) with the data type of the data item, independently of the data set of which the data item is part and of the values of other data items;
2. is consistent (on the instance level) with rules specifed for a particular data item instance, optionally considering the values of other data items;
3. is consistent (on the collection level) with rules specified by the data set of which a particular data item is part, optionally considering the values of other data items.

The system for controlling a workflow and for accessing its data comprises a data processing unit configured to implement the steps of the corresponding method. Preferably, the system is configured by implementing the above-described data structures and associated processing rules and methods in an object oriented (OO) framework, i.e. using OO methodology: Actual data is represented by software objects that are instances of classes, with class definitions specifying the general relations between the objects. For example,
- **data sets** are represented by (instances of) a DataObject class;
- the Status of a data set by a Status class;
- individual **data items** by a DataItem class;
- information associated with a data item and describing properties of a data item by a DataDescriptor class; and
- validation rules by a ValidationRule class.

Further classes may be defined to implement the methods and data structures for running the system, interfacing it with user interfaces and hardware (memory, communication means), and performing the associated "bookkeeping" involved when changing data items and statuses.

A computer program product for controlling a workflow and for accessing its data according to the invention is loadable into an internal memory of a digital computer, and comprises computer program code means to make, when said computer program code means is loaded in the computer, the computer execute the method according to the invention. In a preferred embodiment of the invention, the computer program product comprises a computer readable medium, having the computer program code means recorded thereon.

Further preferred embodiments are evident from the dependent patent claims. Features of the method claims may be combined with features of the system claims and vice versa.

### BRIEF DESCRIPTION OF THE DRAWINGS

The subject matter of the invention will be explained in more detail in the following text with reference to preferred exemplary embodiments which are illustrated in the attached drawings, which schematically show:
- Figure 1: a class diagram of the classes used;
- Figure 2: a first user form example 1 (requestor);
- Figure 3: a second user form example 2 (stock exchange);
- Figure 4: a list of data sets; and
- Figure 5: a flow diagram for the method according to the invention.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

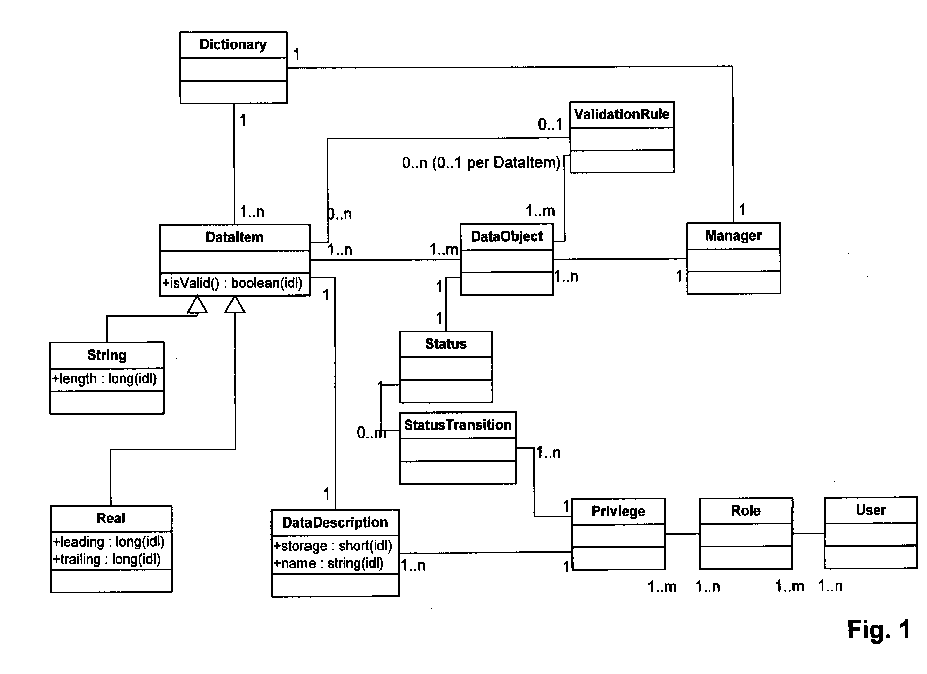

**Figure 1** schematically shows a class diagram which describes object classes used in a preferred embodiment of the invention. The diagram follows the commonly known UML (unified modelling language) standard; the individual classes shall be explained in more detail below. The term "idl" expresses that method parameters are expressable in some interface description language.

First a generic description of the various classes used to define a software system according to the invention is given. It is followed by a specific example of classes used to define a particular implementation of such a software system. Note that not all classes are required to implement the core concept of the invention, and that some classes are only described in order to give a comprehensive view of the complete system.

### DataObject Class

A DataObject represents a collection of related data items.
- Members of this class comprise as attributes a *set of Dataltems* with associated DataDescriptors.
- Members of this class are preferably organised in an object hierarchy of DataObject classes.

For example, a DataObject instance represents the data fields of a request form. The data fields may comprise information entered by a requesting person (name, address, request specific information, ...) and information entered by a person processing the request (comments, internal data assigned to the request, ...).

An exemplary hierarchy of DataObject classes comprises "mortgage request", which is a subclass of "long term loan request" which is a subclass of "credit request" which is a subclass of "general request". Recall that according to the OO paradigm a member of a subclass or child class inherits the properties of its parent class. As another example, in the context of a request for listing on a stock exchange, a DataObject is "warrant request", which is a subclass of "derivative request" which is a subclass of "request".

### DataItem Class

A DataItem instance contains a single chunk of data, which from the point of view of access control is regarded as an atomic entity. The class of the DataItem instance provides meta-information describing the instance.
- Members of this class are preferably organised in an object hierarchy of DataItem classes.

An exemplary hierarchy of DataItem classes comprises "Price" which is a subclass of "RealNumber" which is a subclass of "Number" which is a subclass of "General". For a given application, the DataItem instances used are preferably stored in a dictionary or catalogue of DataItems.

A DataItem instance is associated with a DataDescriptor instance, for example, when the DataItem instance is instantiated.

### DataDescriptor Class

A DataDescriptor class represents additional properties of a DataItem class.
- Members of the DataDescriptor class comprise as attributes:
   ○ *Privilege.* This attribute defines access to the corresponding DataDescriptor.
   ○ *Storage.* This attribute describes how the DataItem is stored. It may take the values "primary", "core" and "none", as explained below.

For example, a DataItem instance represents an address string, or a monetary value, a status code, a calendar date, a request identification number, etc. The name of the DataDescriptor instance associated with a particular DataItem instance is identified by an immutable string which gives the name of the DataItem, such as "Requestor Address", "Date of submission", "Current request status", etc...

The Privilege attribute, as shall be explained later in more detail, has to be identical to a Privilege attribute of another entity, in order to allow that other entity to modify the instance of the DataItem. Typically, the other entity is a user, or from the point of view of the computer system, someone who logs in as a particular user and therewith assumes a particular user identity.

The Storage attribute preferably defines whether
i) the DataItem instance is an identifier used to uniquely identify a DataObject instance. In this case, the identifier may not be modified.
ii) the DataItem instance is not such an identifier. In this case, it may be modified.
iii) the DataItem instance value is calculated on the fly, from the value(s) of other DataItem instances. In this case, no permanent storage is required to for the DataItem instance.

For the example following further below, the labels "primary", "core" and "none" shall be used to denote cases i), ii) and iii), respectively.

### ValildationRule Class

A validation rule is automatically executed in order to verify the validity of the values of DataItems. Validation rules preferably operate on different levels, these levels comprising
1. a level 1 test, or canonical test: Is the value consistent with its associated DataItem? This test does not require any knowledge about the context of the DataItem. For example, it is checked whether a value is consistent with the format required for a calendar date, or for an integer value, or for an alphanumeric string, etc...
2. a level 2 test, or instance specific test: Is the value consistent with a requirement that is specific to a particular instance of the DataItem? For example, for a first trading date it is checked that is in the future or a range check is performed for prices.
3. a level 3 test, or object type specific test: Is the value consistent with a requirement that is specific to the DataObject class? For example, in a particular request form, and in a certain Status, a certain DataItem may be mandatory, i.e. a value has to be entered.

### Status Class

A Status is associated with a DataObject. The Status describes how the DataObject may be modified, and to which (other) Statuses the DataObject may be moved.
- Members of this class comprise as attributes:
   ○ *Privilege.* This attribute controls access to the DataItems of the DataObject. It can take the same values as the Privilege attributes of the Dataltems. For clarity, the Privilege attribute of a Status shall also be referred to as "Mutability Privilege". There may be zero, one or more Mutability Privilege(s) for a given Status.
   ○ *Next Status.* This attribute specifies a Status to which the DataObject may be moved. There may be more than one Next Status attribute. A Next Status may be identical to the Status itself. The Next Status may be constrained according to the values of the DataItems of the DataObject.
   ○ *Status Change Privilege.* This attribute is associated with one Next Status and defines access to the corresponding status change. Conversely, each Next Status is associated with one or more Status Change Privileges. In a preferred embodiment of the invention, one Next Status and associated Status Change Privileges are represented by an instance of a **Status Transition** class.

Thus, each Status class allows for a Status instance to have zero, one or more Mutability Privileges, and one or more Next Status, each Next Status being associated with one or more Status Change Privileges. If a Status has no Mutability Privileges, no data items at all can be modified in this Status.

All the Status instances associated with a particular DataObject together define the states and state transitions for that DataObject, preferably represented by Status Transition instances. Each DataObject preferably is associated with an initial Status; when an instance of the DataObject is created, the instance is given the initial Status.

Built into the system processing the class instances are the following basic rules:
- **Mutability rule:** When a DataObject is in a particular Status, then exactly those DataItems are mutable, whose Privilege matches at least one Mutability Privilege of said Status and also at least one Privilege of the current user.
- **Status change rule:** When a DataObject is in a particular Status, then it can move to one of exactly those Next Status whose Status Change Privilege matches a Privilege of the current user.

These rules, together with the preceding class definitions, allow for an extremely compact, redundancy free definition of what may be changed when by whom (i.e. data and status changes).

### Workflow class

The Workflow class is a collection of Status instances. Each DataObject is associated with one Workflow instance. Hence, the Workflow defines the valid sequences of Statuses a DataObject can go through. A Workflow also provides hooks to intercept a DataObject's Status change. Such a hook can be used, e.g., to perform bookkeeping functions.

### Manager Class

There is a single Manager instance per application instance. It embeds the mechanisms described so far in the surrounding computer system. For example, the Manager performs the communication with the physical data storage and with up-and down-stream systems. It also performs any functions which concern more than one DataObject.

### General remark

Whereas the classes so far have been described mainly in terms of object attributes, the classes also comprise the usual methods for accessing their attributes, that is, methods for modifying attributes, for querying objects about their attributes, for returning names and values of attributes etc....

### Example

A particular implementation of a software system according to the invention is defined by specific classes established according to the above-described abstract class structure.

As a simplified example, consider a request for the listing of a particular financial product on a stock exchange. The basic process consists of
1. the request being generated by a user representing a requestor, e.g. the bank which offers the product,
2. the request then being processed by a user representing the stock exchange.

The software is accessed or used by persons or machine-based entities that have functions (within their organisation) such as "requestor", "formalities check", "product assessment", and "responsible for acceptance". For the sake of simplicity, we shall henceforth only refer to persons, it is however understood that a computer can take on similar functions. When a person logs into the software system according to the invention, she is associated with one or more Privileges. These Privileges use the same labels as the Privileges of the DataDescriptors, the Mutability Privileges and the Status Change Privileges. For convenience's sake, a Privilege associated with a current user shall also be called a "User Privilege".

The association of user privileges to users may either be done directly, that is, by maintaining a computer readable representation of a "n..1" " relationship between users and user privileges. Alternatively, the association is represented indirectly, that is, the representation is based on intermediate software objects called *roles,* wherein each user is associated with one or more roles, and each role is associated with zero, one or more privileges. This makes it easier to manage and edit the association of user privileges: when,.for example, a new user privilege is introduced and must be associated with a multitude of employees that have the same job function, then it suffices to update the definition of a single role by adding the new user privilege to the role (rather than having to add the user privilege to each of the employees record).

For the present example, of several users employed by the requestor, a first one is associated with the User Privilege "requestor", and a second another one with the user Privileges "requestor" and "submit". Of the users working at the stock exchange, a first one is associated with the User Privilege "staff", and a second one with the User Privileges "staff" and "decide". A further Privilege "system" represents the software system itself.

The **DataObject** is defined e.g. by a
- WarrantRequest class;
   ○ with DataItem "warrant type code".

The WarrantRequest class is a subclass of
- DerivativeRequest class;
   ○ with DataItems "issue price", "execution price", etc...

The DerivativeRequestclass is a subclass of
- Request class;
   ○ with DataItems "identifier", "capitalisation", "status code", "ISIN" (International Securities Identifying Number), "modification date", "modification time", "modification user", etc...

### Exemplary DataDescriptors for the DataItems are

- "identifier";
   ○ with Privilege: "system" and
   ○ Storage: "primary"; and
   ○ being associated with a DataItem of class "String(10)", i.e. a string with 10 characters.
- "ISIN";
   ○ with Privilege: "requestor" and
   ○ Storage "core"; and
   ○ being associated with a DataItem of class "ISIN", which is a subclass of "String(12)".
- "capitalisation";
   ○with Privilege "system" and
   ○ Storage: "none"; and
   ○ being associated with a DataItem of class "Price", which is a subclass of "Real(9, 6)", i.e. a real number with 9 digits leading and 6 digits trailing the decimal mark.

Exemplary **ValidationRules,** in addition to those already described, are defined e.g. to check the validity of an ISIN by means of a parity character included in the ISIN (level 1 test).

Exemplary Status classes are:
- "draft";
   ○ with Mutability Privilege "requestor" and
   ○ Next Status "submitted" with Status Change Privilege "submit".
- "submitted";
   ○ with Mutability Privilege "staff" and
   ○ Next Status "accepted" with Status Change Privilege "decide", and
   ○ Next Status "rejected" with Status Change Privilege "decide".

The above information, in particular the DataObjects, the DataDescriptors and the Status classes, sufficiently defines the workflow and the modification rights during the entire process. Forms for entering and changing data items can be generated in a fully automated fashion, wherein the availability of data fields and of command buttons is controlled dynamically according to the basic rules given above.

For the present example, when a requestor chooses to create a new request, then an instance of the DataObject "warrant request class" is created by the system. The system retrieves the DataItems from the warrant request class, including those DataItems inherited from its parent classes ("derivative request", "request"), and creates corresponding instances for storing the item data. The DataObject is put in the Status "draft". This is done automatically by having predefined the initial Status for each DataObject.

The system then dynamically generates an entry form for modifying the instances of the DataItems. In a straightforward, no-frills implementation of the system, this is done by:
1. creating an entry field for each DataItem
2. if the Privilege of a DataItem is identical to a Mutability Privilege of the current Status and to a User Privilege of the current user, then allow the field to be changed by the user. Otherwise, optionally display the field content, but do not allow the user to change it.
3. if a "Next Status" of the current Status has a Status Change Privilege that is identical to a User Privilege of the current user, then display a command button associated with said Next Status.

In the present example, the first user working for the requestor will see all the DataItems of the warrant request class. The identifier may not be changed by the user, since its Privilege is "system". The ISIN may be changed by the user, since the Privilege of the ISIN and the current status and the current user is "requestor". The mutability of the other DataItems follows in a similar fashion.

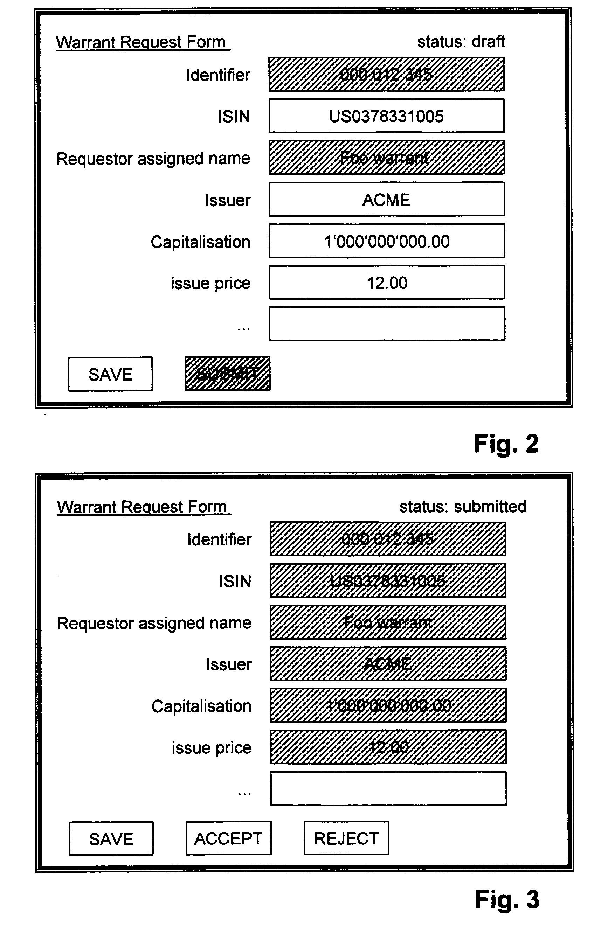

An exemplary representation of an entry form represented to a requestor is shown in **Figure 2****.** Fields that cannot be changed, and buttons that cannot be operated, are hatched. In an actual implementation, their state is preferably indicated by colour coding, shading, or by not drawing them at all.

The first user is only offered a "Save" button, since the only Next Status defined in Status "draft" would require the Status Change Privilege "submit", which the first user does not have. For this reason, the "Submit" button is hatched (as in Figure 2), to indicate that it is inactive, or not displayed at all. The "Save" button may be generated automatically by the system, either as a default for each form, or by associating it with a "status change" in which the Next Status is identical to the present Status. This allows for an elegant implementation of the save feature by having the underlying Manager automatically performing a save operation for every status change, including such a dummy change. A corresponding "identical" Next Status entry can e.g. be included in each Status class definition or inherited from a Status parent class. As a result, it is not necessary to provide for a separate "Save" function and a corresponding control button.

The second user working for the requestor will, when presented with the same form, be allowed to make the same changes, since he also has the privilege "requestor". In addition, he will also be presented with a "Submit" button for triggering the change to Next Status "submitted", since the second user also has the privilege "submit".

In a similar fashion, the fields that are modifiable by the first and second user at the stock exchange, and the control buttons they are presented with, are determined automatically according to the status and the user privileges. If they could view the request while it is still in the "draft" Status, they would not be allowed to modify any fields, since the "draft" Status limits the mutability to users with privilege "requestor".

An exemplary representation of an entry form represented to a stock exchange staff member is shown in **Figure 3****.** A number of fields that were entered by the requestor cannot be changed anymore.

In a preferred embodiment of the invention, the fields showing the DataItems are visually coded, e.g, by colouring or shading the field text and/or background, in order to represent the state of the field or DataItem. The field state can be
- mutable by the present user, and the content of the field being valid (according to the applicable ValidationRules). The field text is coloured e.g. green.
- mutable by the present user, and the content of the field being invalid. The field text is coloured e.g. red.
- not mutable by the present user, i.e. read-only. The field text is coloured e.g. black.

In a further preferred embodiment of the invention, a Validation Status of the complete form, or in other words, the DataObject, is determined in the following manner:
- Recall that a field (or its DataItem) is mutable, as defined by the above mutability rule, i.e. if the DataItem Privilege is also in the list of Mutability Privileges of the DataObject's Status and in the list of User Privileges.
- A field (or its DataItem) is valid, if no ValidityRule designates it as being invalid.
- The DataObject as a whole, when being worked on by a user, is assigned an DataObject Validation Status. This Validation Status is defined as being "valid" only if all the mutable fields are valid.

Preferably, status changes are enabled only if the Validation Status of the DataObject is "valid". In this manner, a user must bring all fields that he has control over into a valid state. Again, the procedure for implementing the Validation Status is independent of the actual application. On the other hand, the actual behaviour of the procedure is defmed by the definition of the ValidationRules and the Privileges.

The validity and mutability of a field, and the Validation Status of the DataObject are preferably indicated visually in the form representing the fields of the DataObjects.

In a further preferred embodiment of the invention, a particular user is presented with a list of requests, i.e. DataObject instances, that he may modify. This list is generated dynamically by checking each existing request whether it comprises at least one field that is mutable by the user, or at least one Status Change that can be triggered by the user. If this is the case, the request is one that the user may modify. Preferably, the list, or a separate list, may also comprise a list of requests that the user modified at some earlier point in time, even if the user is currently not allowed to modify it. This allows the user to check the progress of the request through further states, which may bring it into a state in which the user is again allowed to modify it.

The list of modifiable requests is of course represented visually to the user, with each request being selectable by an appropriate selection means such as a control button, menu entry, drop down list entry etc. In general terms, this means that at least one information item per modifiable request is displayed to the user as, e.g. an entry in a list. The information item may be e.g. an identifier generated by the system, or a combination of the requestor's name and/or ISIN and/or request date etc. When the user selects a particular request, the form representing the request (i.e. its DataObject instance), as described above, is generated automatically.

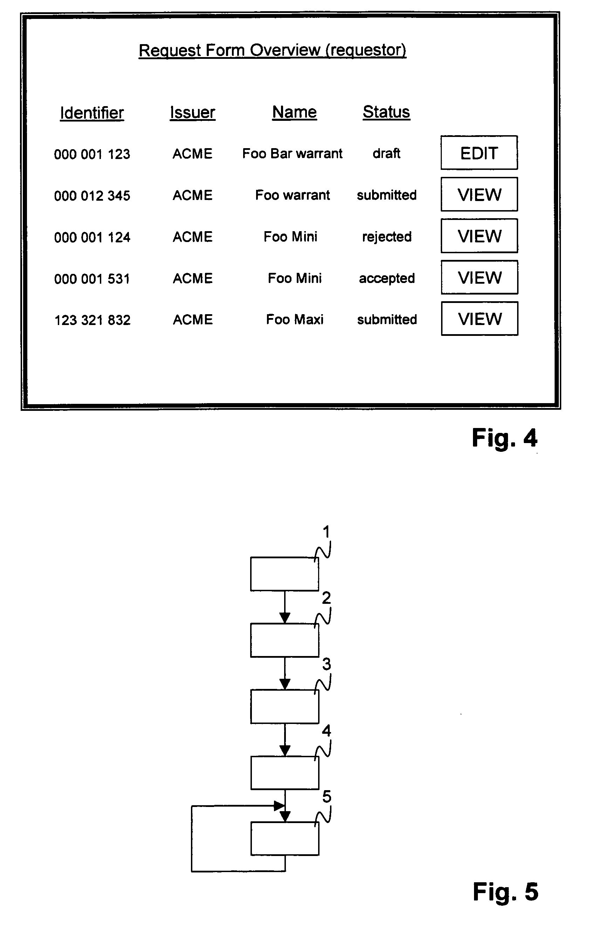

An exemplary representation of such a list is given in **Figure 4****.** Each entry in the list can be selected by pressing an "EDIT" button, which causes the corresponding entry form to be displayed.

These lists and forms are generated in a completely automated fashion by generic software code. The essential information related to the contents of the lists and forms lies only within the classes and class instances described above.

**Figure 5** shows a flow diagram of the method according to the invention. The individual steps shown are:
1. defining and storing (1) at least one data set, the data set comprising a plurality of data items representing the data that is modified in the course of the workflow, and the data set being associated with one of several statuses; each status indicating that the data set is at a particular location in the workflow;
2. defining and storing (2) a set of privileges, each privilege being representable by a unique identifier;
3. creating and storing (3) a relation by which a user identity is associated with at least one of the privileges, the privileges associated with a user henceforth being referred to "user privileges";
4. creating and storing (4) a relation by which a particular status of a data set is associated with at least one action-privileges pair; in which pair the privileges are a subset of the set of privileges, and the action is associated with a modification of the data set;
5. allowing, when the data set is in a particular status, a user having a particular user identity to perform a particular action for modifying the data set (5) if and only if the privileges of said user identity and the privileges forming, with said action, an action-privileges pair associated with the status, share at least one privilege.

The first four steps are initialization steps that are performed when setting up the system for operation, the last step is executed repeatedly during operation of the system; for a plurality of different users accessing and optionally modifying the data represented by the data set.

While the invention has been described in present preferred embodiments of the invention, it is distinctly understood that the invention is not limited thereto, but may be otherwise variously embodied and practised within the scope of the claims.

## Claims

1. A method for controlling a workflow and for accessing data, wherein the data is stored in computer-readable form and is modified in the course of the workflow, the method comprising the following steps being executed by means of a data processing system:
- defining and storing (1) at least one data set, the data set comprising a plurality of data items representing the data that is modified in the course of the workflow, and the data set being associated with one of several statuses; each status indicating that the data set is at a particular location in the workflow;
- defining and storing (2) a set of privileges, each privilege being representable by a unique identifier;
- creating and storing (3) relations by which a user identity is associated, directly or indirectly, with at least one of the privileges, the privileges associated with a user henceforth being referred to "user privileges";
- creating and storing (4) a relation by which a particular status of a data set is associated with at least one action-privileges pair; in which pair the privileges are a subset of the set of privileges, and the action is associated with a modification of the data set;
- allowing, when the data set is in a particular status, a user having a particular user identity to perform a particular action for modifying the data set (5) if and only if the privileges of said user identity and the privileges forming, with said action, an action-privileges pair associated with the status, share at least one privilege.

2. The method of claim 1, wherein the action of at least one action-privileges pair corresponds to the modification of data items of the data set; the corresponding privileges henceforth being referred to as "mutability privileges" of the status with which the action-privileges pair is associated.

3. The method of claim 2, comprising the further steps of
- creating and storing a relation by which each data item set is associated with one and preferably more than one of the privileges;
- allowing, when the data set is in a particular status, a user having a particular user identity to modify a particular data item of the data set if and only if the privileges of said user identity and the privilege(s) of said data item and the mutability privileges of said status share at least one privilege; a data item for which modification under these circumstances is allowed, henceforth being referred to as "mutable data item".

4. The method of one of claims 1 to 3, wherein the action of at least one action-privileges pair corresponds to the modification of the status of the data set, the action specifying a Next Status; the corresponding privileges henceforth being referred to as "Status Change Privileges" of the status with which the action-privileges pair is associated.

5. The method of claim 4, comprising the further step of
- allowing, when the data set is in a particular status, a user having a particular user identity to modify the status to become a given Next Status if and only if the privileges of said user identity and the Status Change Privileges associated with said Next Status of said status share at least one privilege.

6. The method of one of claims 1 to 5, comprising the further step of
- executing validation rules for verifying whether the values of data items are legal and consistent, the rules preferably being
- first level validation rules for verifying whether the value of a data item is consistent with the data type of the data item, independently of the data set of which the data item is part and of the values of other data items;
- second level validation rules for verifying whether the value of a data item is consistent with rules specified by the particular instance of the data item, optionally considering the values of other data items; or
- third level validation rules for verifying whether the value of a data item is consistent with the values of other data items according to rules specified by the data set of which the data item is part, optionally considering the values of other data items.

7. The method of one of claims 1 to 6, comprising the further steps of
- automatically generating, for a given user identity, a mutable subset of a given set of data sets, said subset containing those data sets which a user having said identity is allowed to modify; and
- displaying the mutable subset to the user, preferably by displaying at least one information item per mutable subset, each information item uniquely identifying a subset.

8. The method of claim 7, wherein the step of generating a mutable subset comprises the steps of
- determining, for each data set in the given set of data sets, if at least one of the user's privileges matches at least one privilege of an action-privilege pair that is associated with the current status of the data set;
- if this is the case, then determining said data set to be a member of the mutable subset.

9. The method of one of claims 3 to 8, comprising the further step of
- automatically generating, for a given user identity and for a given data set, a visual representation of the data set, wherein data items are visually represented as data fields.

10. The method of claim 9, wherein the mutability and graphic properties of individual data fields are controlled according to the mutability of the data item they represent.

11. A computer readable medium comprising computer program code loadable into an internal memory of a digital computer, to make, when said program code is loaded and executed in the computer, the computer perform the method according to one of the preceding claims.

12. A data processing system for controlling a workflow and for accessing data that is stored in computer-readable form and is modified in the course of the workflow, said data processing system being configured to perform the method steps of at least one of the claims 1 to 10.
